# EUROPEAN PATENT APPLICATION

(11) **EP 4 505 879 A1**
(43) Date of publication of application: **12.02.2025**
(21) Application number: 22936429.4
(22) Date of filing: 08.04.2022
(51) Int. Cl.: A23L 27/10, A23B 7/05, A23B 7/06

(54) **WASABI RHIZOME IN WHICH DETERIORATION IN QUALITY IS INHIBITED**

(71) Applicant: House Foods Group Inc., Higashiosaka-shi, Osaka 577-8520 (JP)
(72) Inventor: WATANABE, Takeo, Higashiosaka-shi, Osaka 577-8520 (JP); NAKAMURA, Takeru, Higashiosaka-shi, Osaka 577-8520 (JP); NAKATA, Saori, Higashiosaka-shi, Osaka 577-8520 (JP); KAMATA, Yasuhiro, Higashiosaka-shi, Osaka 577-8520 (JP); OKA, Yumi, Higashiosaka-shi, Osaka 577-8520 (JP)
(74) Representative: Schrell, Andreas
(86) International application number: PCT/IB2022/053307
(87) International publication number: WO 2023/194781

(57) **Abstract**

Provided are: a wasabi rhizome in which deterioration in quality is inhibited; a method for preserving the same; and a method for producing the same.

The present specification discloses: a wasabi rhizome characterized by having a phenylalanine ammonia lyase activity per 1 mg of protein of less than 0.04 U/mg protein, after having the surface thereof trimmed and being preserved for 5 days at 0°C; and a preservation method that involves preserving said wasabi rhizome at a temperature of -5°C to 10°C. The present specification also discloses a method for producing a wasabi rhizome in which deterioration in quality is inhibited, the method comprising: (1-1) immersing a wasabi rhizome in water at a temperature higher than 40°C but lower than 60°C; and/or (1-2) immersing the wasabi rhizome in an ethanol solution.

## Description

### Technical Field

The present disclosure relates to a wasabi rhizome and a method of preserving the same.

The present disclosure also relates to a method of producing a wasabi rhizome with suppressed quality deterioration.

### Background Art

Wasabi (*Eutrema japonicum* (Miq.) Koidz., also referred to as "honwasabi") is a condiment that has been widely used as a seasoning for fish meat and the like since olden times. The source of the pungency of wasabi is isothiocyanate (mainly allylisothiocyanate) generated by an enzymatic reaction between glucosinolate (mainly sinigrin) and myrosinase that are contained in wasabi. Among others, grated fresh wasabi rhizome has excellent pungency and flavor and is of very high utility value.

While preserved, however, a fresh wasabi rhizome, a cut face and the like of which are easily discolored and result in the decrease of their commercial value. Hence, fresh wasabi rhizomes are not easy to commercially distribute.

Patent Literature 1 discloses a method of -cryopreserving a condimental vegetable, including: adjusting the water content of a harvested condimental vegetables such as honwasabi in the range of from 20% to 50%; and then cryopreserving them at -16°C or less. According to Patent Literature 1, this method can solve a problem in that neither normal-temperature preservation based on a complete drying method nor low-temperature preservation based on a drying method (close to complete drying) allows to achieve the preservation of condimental vegetables, retaining the color, scent, and taste that are originally possessed by the condimental vegetables.

Patent Literature 2 describes, as means for preserving root wasabi (a wasabi rhizome) for a long time, a method of enclosing fresh root wasabi at a temperature of less than 42°C with wax or solid paraffin that can keep its plasticity at 42°C, and the product therefor.

Patent Literature 3 describes a root wasabi preserving apparatus that allows to preserve and distribute root wasabi (wasabi rhizomes) in an environment equal to the cultivation environment of the wasabi so that the quality deterioration of the wasabi can be suppressed during distribution.

According to Non-Patent Literature 1, the evaluation criteria of freshness of vegetables and fruits differ between the kinds of vegetables and fruits, and there is no evaluation criterion of freshness that can be quantified and applies to all kinds of vegetables.

According to Non-Patent Literature 2, a cut lettuce not treated with warm water kept browning with time, but a cut lettuce treated with warm water hardly browned, in which the cut lettuces were immersed in 50°C warm water for 90 seconds, cooled with 4°C cold water, and stored at 4°C in a refrigerator for 6 days. Non-Patent Literature 2 mentions that the browning of the lettuce was suppressed by the warm-water treatment because the warm-water treatment reduced the activity of an enzyme, phenylalanine ammonia-lyase (PAL), which is associated with the synthesis of a polyphenol, a substrate of a browning substance.

### Citation List

### Patent Literature

Patent Literature 1: JP H03-098532 A
Patent Literature 2: JP H08-173026 A
Patent Literature 3: JP 2010-124826 A

### Non-Patent Literature

Non-Patent Literature 1: "Postharvest Physiology Related to Freshness of Vegetables and Fruits", Shokuryo: food science technology, 2018, 56, 43-66
Non-Patent Literature 2: Murata, M. et al. "Quality of cut lettuce treated by heat shock" Biosci. Biotechnol. Biochem., 2004, 68 (3), 501-507

### Summary of Invention

### Technical Problem

To date, as described in Patent Literatures 1 to 3, studies have been made on a method of suppressing the quality deterioration of a wasabi rhizome during preservation, but no sufficiently satisfiable method has been provided yet.

In view of above, provided herein are a wasabi rhizome with suppressed quality deterioration, a method of preserving the same, and a method of producing the same.

### Solution to Problem

Disclosed herein are one or more embodiments of the following.
[1] A wasabi rhizome having a phenylalanine ammonia-lyase activity (per 1 mg of protein) of less than 0.04 U /mg of protein (wherein 1 U refers to an activity that allows 1 µmol of cinnamic acid per hour to be generated from L-phenylalanine at 41°C), after preserving the wasabi rhizome at 0°C for 5 days following trimming of the surface thereof.
[2] A method of preserving the wasabi rhizome according to [1], including preserving the wasabi rhizome according to [1] at a temperature of -5°C or more and 10°C or less.
[3] A method of producing a wasabi rhizome with suppressed quality deterioration, the method including:
   (1-1) immersing a wasabi rhizome in water having a temperature of more than 40°C and less than 60°C; and/or
   (1-2) immersing the wasabi rhizome in an ethanol solution.
[4] The method according to [3], wherein (1-1) is the step of immersing the wasabi rhizome in water having the temperature of more than 40°C and less than 60°C for a duration of 5 minutes or more and 180 minutes or less.
[5] The method according to [3] or [4], wherein (1-2) is the step of immersing the wasabi rhizome in the ethanol solution with 45 v/v% or more and 90 v/v% or less ethanol for a duration of 1 minute or more and 10 minutes or less.
[6] The method according to any one of [3] to [5], further including (2) preserving the wasabi rhizome under refrigeration after (1-1) and/or (1-2).
[7] The method according to [6], wherein (2) is the step of preserving the wasabi rhizome at a temperature of -5°C or more and 10°C or less.
[8] A method of producing a wasabi rhizome with suppressed quality deterioration, the method including (3) reducing a phenylalanine ammonia-lyase activity of the wasabi rhizome.
[9] The method according to [8], wherein (3) is the step of reducing the phenylalanine ammonia-lyase activity (per 1 mg of protein) of the wasabi rhizome such that the phenylalanine ammonia-lyase activity is less than 0.04 U/mg of protein (wherein 1 U refers to an activity that allows 1 µmol of cinnamic acid per hour to be generated from L-phenylalanine at 41°C), after preserving the wasabi rhizome at 0°C for 5 days following trimming of the surface thereof.
[10] The method according to [8] or [9], further including (4) preserving the wasabi rhizome under refrigeration after (3).
[11] The method according to [10], wherein (4) is the step of preserving the wasabi rhizome at a temperature of -5°C or more and 10°C or less.

### Advantageous Effects of Invention

A wasabi rhizome disclosed herein is less likely to undergo quality deterioration such as discoloration even with preservation under refrigeration conditions for a long time.

A method of preserving a wasabi rhizome disclosed herein allows to suppress the quality deterioration of a wasabi rhizome during preservation.

A method of producing a wasabi rhizome disclosed herein allows to produce a wasabi rhizome with suppressed quality deterioration during preservation under refrigeration.

### Brief Description of Drawing

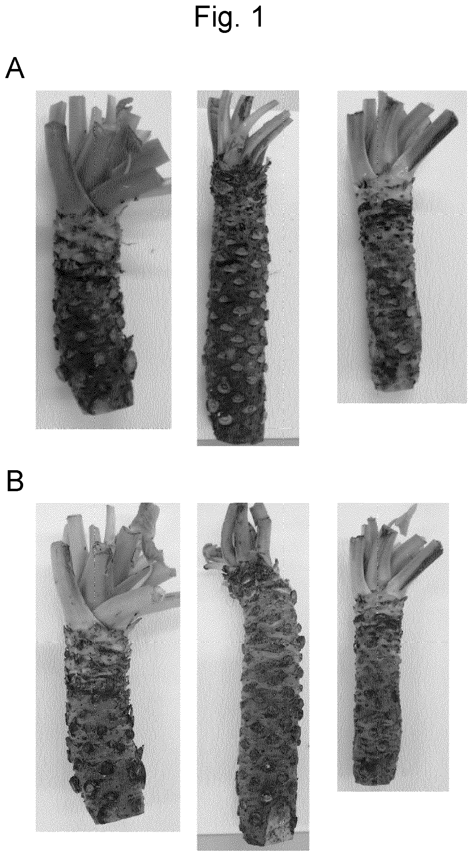

[Figure 1] Figure 1 is the photographs of the whole appearances of the wasabi rhizomes before (A: the upper row); and after preservation at 0°C for 4 weeks (B: the lower row), wherein the wasabi rhizomes were trimmed after the harvest, not treated with warm water. After the 4-week preservation, the cut faces of the petiole scars were dark-colored.

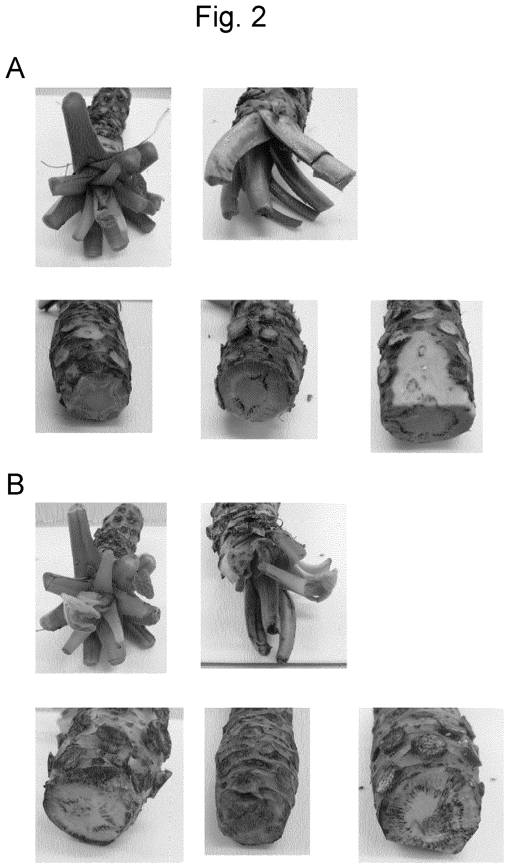

[Figure 2] Figure 2 is the photographs of the cut faces of the petiole base portions and the bottom portions of the wasabi rhizomes before (A: the upper row); and after preservation at 0°C for 4 weeks (B: the lower row), wherein the wasabi rhizomes were trimmed after the harvest, not treated with warm water. After the 4-week preservation, the petiole base portions were withered, and there were buds sprouting therefrom. The cut faces of the bottom portions of the rhizomes were dark-colored.

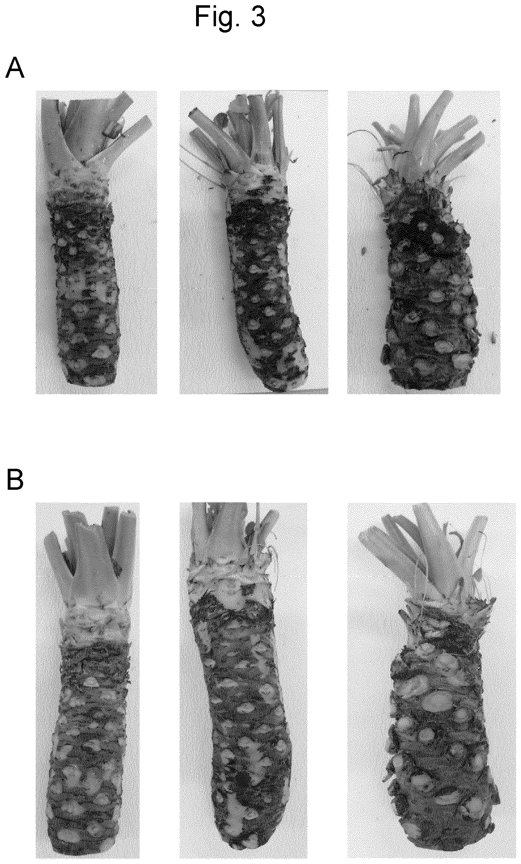

[Figure 3] Figure 3 is the photographs of the whole appearances of the wasabi rhizomes before (A: the upper row); and after preservation at 0°C for 4 weeks (B: the lower row), wherein the wasabi rhizomes were trimmed after the harvest, treated with warm water under Condition 7 (45°C, for 30 minutes). After the 4-week preservation, the wasabi rhizomes were not discolored and kept green.

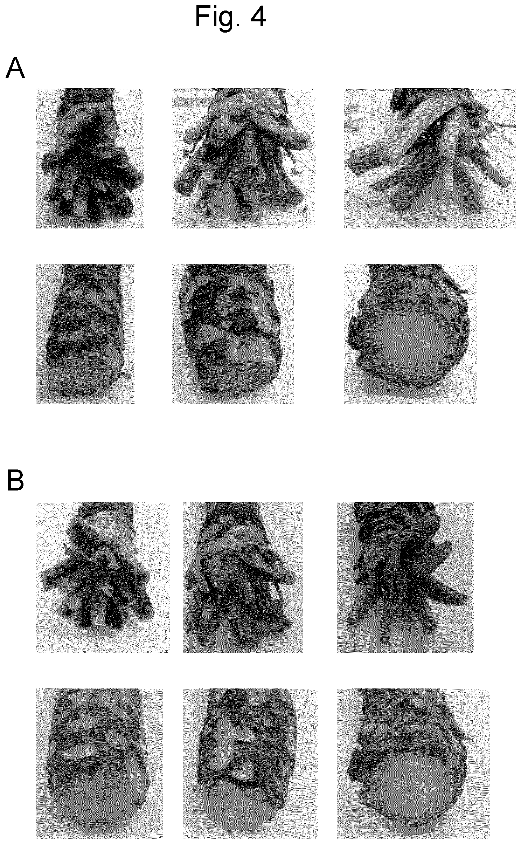

[Figure 4] Figure 4 is the photographs of the cut faces of the petiole base portions and the bottom portions of the wasabi rhizomes before (A: the upper row); and after preservation at 0°C for 4 weeks (B: the lower row), wherein the wasabi rhizomes were trimmed after the harvest, treated with warm water under Condition 7 (45°C, for 30 minutes). After the 4-week preservation, the petiole base portions were not withered, and there were no buds sprouting therefrom. The cut faces of the bottom portions of the rhizomes were not discolored and kept green.

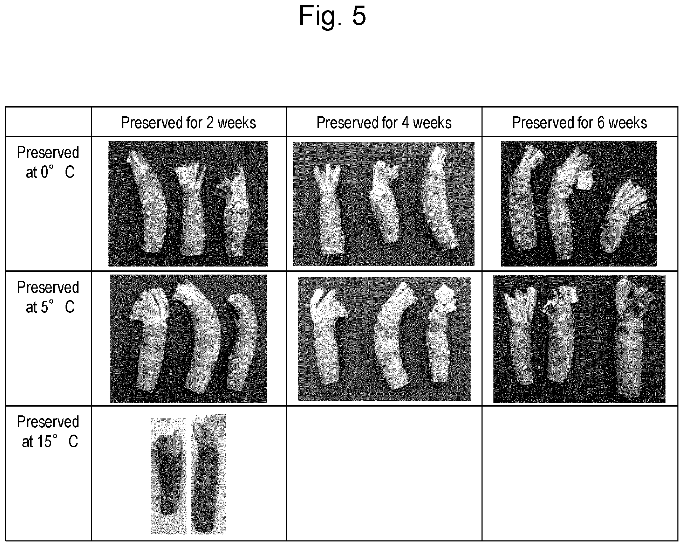

[Figure 5] Figure 5 is the photographs of the appearances of the wasabi rhizomes which were trimmed after the harvest, treated with warm water under Condition 10 (50°C, for 10 minutes), and preserved at 0°C, 5°C, and 15°C for a given period of time.

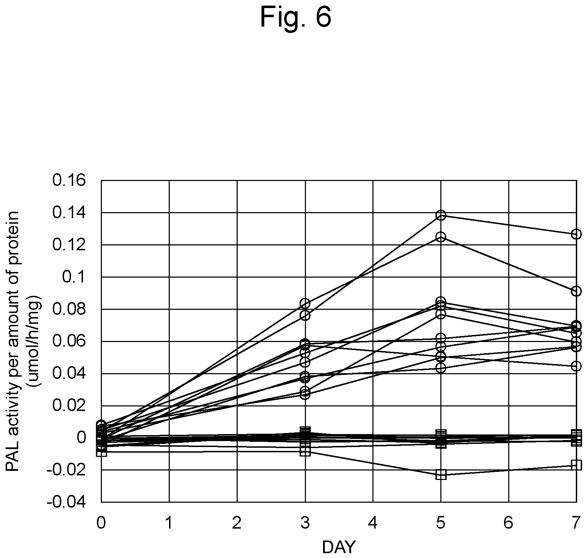

[Figure 6] In Figure 6, the white squares show the PAL activities (per mg of protein) in the wasabi rhizomes immediately after, 3 days, 5 days, and 7 days after retrimming of the wasabi rhizomes were treated with warm water, preserved at 0°C for 2 weeks. The white circles show the PAL activities (per mg of protein) in the wasabi rhizomes immediately after, 3 days, 5 days, and 7 days after retrimming of the wasabi rhizomes not treated with warm water were preserved at 0°C for 2 weeks.

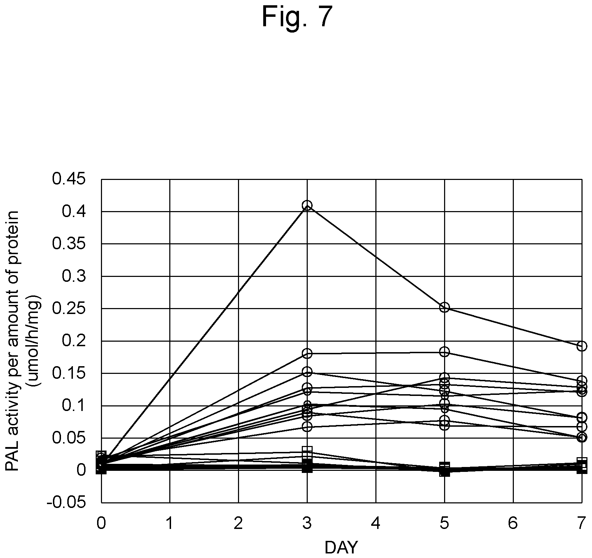

[Figure 7] In Figure 7, the white squares show the PAL activities (per mg of protein) in the wasabi rhizomes immediately after, 3 days, 5 days, and 7 days after retrimming of the wasabi rhizomes were treated with warm water, preserved at 0°C for 6 weeks. The white circles show the PAL activities (per mg of protein) in the wasabi rhizomes immediately after, 3 days, 5 days, and 7 days after retrimming of the wasabi rhizomes not treated with warm water were preserved at 0°C for 6 weeks.

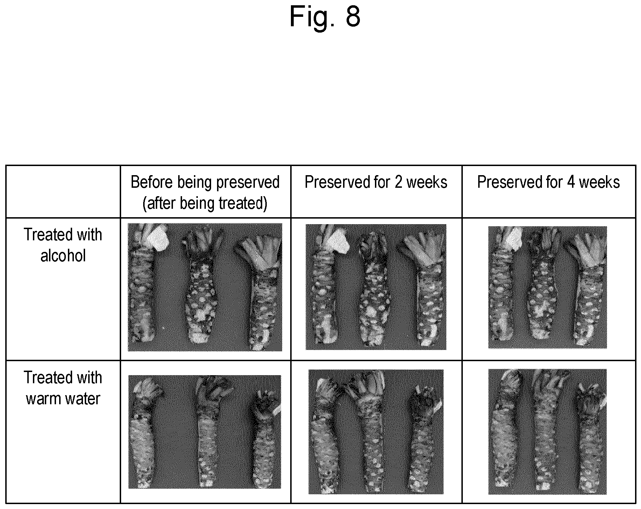

[Figure 8] In Figure 8, the upper row is the photographs of the appearances of the wasabi rhizomes,, which were treated with alcohol, at each time points of preservation at 0°C. The lower row of Figure 8 is the photographs of the appearances of the wasabi rhizomes observed before and after the wasabi rhizomes were treated with warm water and preserved at 0°C for different periods of time.

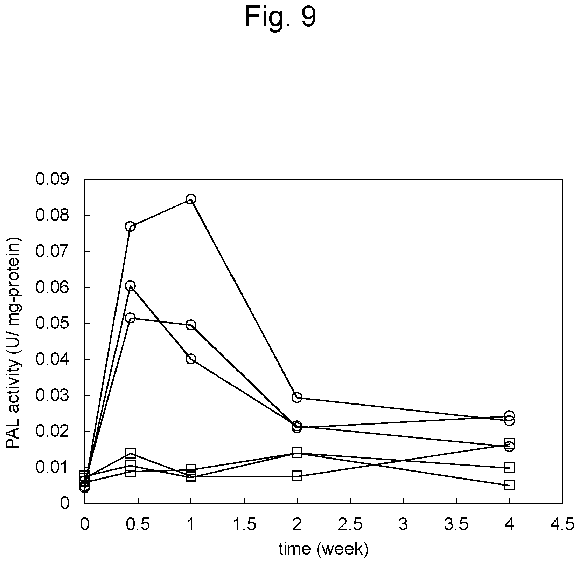

[Figure 9] In Figure 9, the white squares show the PAL activities (per mg of protein) in the wasabi rhizomes immediately after, 3 days, 1 week, 2 weeks, and 4 weeks after retrimming of the wasabi rhizomes were treated with alcohol and retrimmed. The white circles show the PAL activity (per mg of protein) in the wasabi rhizomes immediately after, 3 days, 1 week, 2 weeks, and 4 weeks after retrimming of the control wasabi rhizomes not treated with alcohol.

### Description of Embodiments

### <Wasabi rhizome and method of preserving the same>

A wasabi rhizome according to a first embodiment of the present disclosure is characterized by having a phenylalanine ammonia-lyase activity of less than 0.04 U/mg of protein (1 U refers to an activity that allows 1 µmol of cinnamic acid per hour to be generated from L-phenylalanine at 41°C), after preserving the wasabi rhizome at 0°C for 5 days following trimming of the surface thereof.

A wasabi rhizome according to the present embodiment has an unexpected effect: when preserved under refrigeration, the wasabi rhizome is free from discoloration for a long time, typically 4 weeks or more, retaining the green color as before the start of the preservation under refrigeration. The wasabi rhizome according to the present embodiment also has a myrosinase activity and the scent and pungency peculiar to fresh wasabi rhizomes emerge when the tissues are broken by a treatment such as grating.

The deterioration of the quality of a wasabi rhizome according to the present embodiment is suppressed presumably because a reduction of the phenylalanine ammonia-lyase (PAL) activity suppresses the production of a polyphenol, a substrate of the causative agent of browning (becoming dark-colored), although the mechanism of the suppression of quality deterioration is not limited.

A method of measuring the PAL activity will be described specifically.

"Trimming" of the surface of a wasabi rhizome in order to measure the PAL activity refers to using a peeler to chip off the whole surface of the wasabi rhizome. The thickness of the surface portion to be chipped off is, for example, in the range of from 0.5 mm to 2.0 mm, without any particular limitation. A wasabi rhizome before being trimmed may be a wasabi rhizome having cut faces exposed by preliminarily cutting the petiole scars and bottom portion of the rhizome. In cases where cutting the petiole scars and bottom portion of the rhizome to expose the cut faces is referred to as "the primary trimming", trimming the surface in order to measure the PAL activity is referred to as "retrimming," to be distinguished from the primary trimming.

The present inventors have discovered that the wasabi rhizome with suppressed quality deterioration causes no increase in the PAL activity (per mg of protein) and has the activity at less than 0.04 U/mg of protein, preferably less than 0.03 U/mg of protein, at the time when the wasabi rhizome has been preserved at 0°C for 5 days following trimming of the surface, whereas in a wasabi rhizome with no suppressed quality deterioration (for example, an untreated wasabi rhizome), although the PAL activity immediately after trimming of the surface shows no increase, the PAL activity (per mg of protein) at the time when the wasabi rhizome has been preserved at 0°C for 5 days after the trimming shows an increase and the activity was 0.04 U/mg of protein or more.

The PAL activity (per mg of protein) can be calculated from the results of the following measurement: 0.5 g of a sample for measurement is obtained from the surface of a wasabi rhizome which has been preserved at 0°C for 5 days following trimming of the surface thereof; a purified enzyme solution is obtained from the measurement sample with the method according to Experiment 2; and the PAL activity of the purified enzyme solution and the amount of the protein are measured with the method according to Experiment 2.

Obtaining the purified enzyme solution from the measurement sample with the method according to Experiment 2 can be performed using the following procedure.

0.5 g of the sample for measurement, 2.3 mL of 0.2 M boric acid-NaOH buffer (pH 8.8) containing 5 mM 2-mercaptoethanol (0.2 M BB incl. ME), and 0.075 g of polyvinylpolypyrrolidone are mixed, and the resulting mixture is crushed using a multibead shocker (from Yasui Kikai Corporation) for a total of 30 seconds (under the crushing conditions based on 3000 rpm). The resulting crush solution is transferred to a 1.5 mL tube, and centrifuged to obtain a supernatant. The supernatant obtained is centrifuged again, and a supernatant is collected. This supernatant collected is used as a crude enzyme liquid.

A total of 10 mL of 0.2 M BB incl. ME is allowed to flow through a desalting column PD MiniTrap G-25 (Cytiva), and equilibrated. To the equilibrated column, 500 µL of the crude enzyme solution is added, and then eluted with 1 mL of 0.2 M BB incl. ME. A solution obtained by this elution is used as a purified enzyme liquid.

Measuring the PAL activity of the purified enzyme solution with the method according to Experiment 2 can be performed using the following procedure.

750 µL of 0.5 M boric acid-NaOH buffer (pH 8.8), 100 µL of 10 mM L-phenylalanine solution, and 150 µL of the purified enzyme solution are mixed and allowed to start reaction. The reaction temperature is set at 41°C. The absorbance at 290 nm of the reaction solution is measured at 5 minutes after and 65 minutes after the start of reaction, and the amount of an increase between the absorbance measured at 5 minutes after the start of reaction and that measured at 65 minutes thereafter is determined. The absorbances of solutions having a cinnamic acid concentration of 0 µM, 1 µM, 2.5 µM, 10 µM, 25 µM, 50 µM, and 100 µM respectively are measured at 290 nm to make a calibration curve. Based on the resulting calibration curve, the amount of the cinnamic acid generated in the purified enzyme solution in one hour is calculated from the amount of the increase in the absorbance. The activity that allows 1 µmol cinnamic acid to be generated per hour at 41°C is regarded as 1 Unit.

Measuring the amount of the protein of the purified enzyme solution with the method according to Experiment 2 can be performed in accordance with the attached manual of 2-D Quant kit (from Cytiva).

A second embodiment of the present disclosure is a method of preserving a wasabi rhizome according to the first embodiment of the present disclosure, and relates to a method including preserving the wasabi rhizome at a temperature of -5°C or more and 10°C or less. This method allows to suppress the quality deterioration of the wasabi rhizome preserved for a long time, for example, 4 weeks or more. The temperature is preferably -1°C or more and 6°C or less, particularly preferably 0°C or more and 5°C or less.

### <First method of producing wasabi rhizome with suppressed quality deterioration>

A third embodiment of the present disclosure relates to a method of producing a wasabi rhizome with suppressed quality deterioration, including: (1-1) immersing a wasabi rhizome in water having a temperature of more than 40°C and less than 60°C; and/or (1-2) immersing the wasabi rhizome in an ethanol solution.

The present inventors have discovered that a wasabi rhizome which has undergone the treatment in (1-1) (warm-water treatment) or the treatment in (1-2) (alcohol treatment) achieves an unexpected effect: the wasabi rhizome has a myrosinase activity and a reduced PAL activity as well; and the quality deterioration such as discoloration and withering is suppressed in cases where the wasabi rhizome is preserved under refrigeration for a long time, for example, 4 weeks or more. Even after being preserved under refrigeration, the wasabi rhizome can present the scent and pungency peculiar to fresh wasabi rhizomes.

In (1-1) and (1-2), a wasabi rhizome as a raw material may be a fresh wasabi rhizome. A wasabi rhizome as a raw material may be a fresh wasabi rhizome that has undergone the primary trimming to have cut faces exposed by cutting the petiole scars and the bottom portion of the rhizome. In cases where a fresh wasabi rhizome that has undergone the primary trimming is used, the treatment(s) in (1-1) and/or (1-2) is/are preferably performed as promptly as possible after the primary trimming, specifically within 6 hours, preferably within 3 hours, particularly preferably within 2 hours, after the primary trimming.

In the warm-water treatment in (1-1), the water temperature is preferably 41°C or more, more preferably 42°C or more, more preferably 43°C or more, more preferably 44°C or more, more preferably 45°C or more, and preferably 59°C or less, more preferably 58°C or less, more preferably 57°C or less, more preferably 56°C or less, more preferably 55°C or less, more preferably 54°C or less, more preferably 53°C or less, more preferably 52°C or less, more preferably 51°C or less.

The warm-water treatment in (1-1) preferably is the step of immersing the wasabi rhizome in water having the above-mentioned temperature for a duration of 5 minutes or more and 180 minutes or less. The duration is preferably 8 minutes or more, more preferably 9 minutes or more, more preferably 10 minutes or more, and preferably 150 minutes or less, more preferably 140 minutes or less, more preferably 130 minutes or less, more preferably 120 minutes or less.

The concentration of the ethanol solution to be used in the alcohol treatment in (1-2) is preferably 45 v/v% or more and 90 v/v% or less without any particular limitation. The ethanol solution is preferably an aqueous ethanol solution. Examples of an ethanol solution with the above-mentioned concentration include: an alcohol formulation containing 77 v/v% ethanol, which is commercially available as a food additive; and a diluted solution of the alcohol formulation. The diluted solution is preferably a solution diluted with water.

Without any particular limitation, the duration for the alcohol treatment in (1-2) is preferably 1 minute or more, more preferably 2 minutes or more, more preferably 3 minutes or more, and preferably 10 minutes or less, more preferably 7 minutes or less, more preferably 5 minutes or less.

A method of producing a wasabi rhizome with suppressed quality deterioration according to the third embodiment of the present disclosure preferably further includes (2) preserving the wasabi rhizome under refrigeration after (1-1) and/or (1-2).

The preservation under refrigeration is preservation typically at a temperature of -5°C or more and 10°C or less. The temperature is preferably -1°C or more and 6°C or less, particularly preferably 0°C or more and 5°C or less. A wasabi rhizome that has undergone the treatment(s) in (1-1) and/or (1-2) has a myrosinase activity and a reduced PAL activity as well, and hence, exhibits suppressed quality deterioration when preserved for a long time, for example, 4 weeks or more.

### <Second method of producing wasabi rhizome with suppressed quality deterioration>

A fourth embodiment of the present disclosure is a method of producing a wasabi rhizome with suppressed quality deterioration, the method including (3) reducing a phenylalanine ammonia-lyase (PAL) activity of the wasabi rhizome.

The present inventors have discovered that a wasabi rhizome having a reduced PAL activity achieves an unexpected effect: the quality deterioration such as discoloration and withering is suppressed in cases where the wasabi rhizome is preserved under refrigeration for a long time, for example, 4 weeks or more.

The step (3) preferably is the step of reducing the PAL activity (per mg of protein) of the wasabi rhizome such that the PAL activity of the wasabi rhizome is less than 0.04 U/mg of protein after preserving the wasabi rhizome at 0°C for 5 days following trimming of the surface thereof. The stage is more preferably a treatment that decreases the PAL activity, still allowing the myrosinase activity to remain. Specifically, the stage is the above-mentioned (1-1) and/or the above-mentioned (1-2).

A method of producing a wasabi rhizome with suppressed quality deterioration according to the fourth embodiment of the present disclosure preferably further includes (2) preserving the wasabi rhizome under refrigeration after (3).

The preservation under refrigeration is preservation typically at a temperature of -5°C or more and 10°C or less. The temperature is preferably -1°C or more and 6°C or less, particularly preferably 0°C or more and 5°C or less. The wasabi rhizome that has undergone the treatment of (3) exhibits suppressed quality deterioration when preserved for a long time, for example, 4 weeks or more.

### Examples

### <Experiment 1: freshness retention by warm-water treatment>

Immediately after being harvested, a wasabi rhizome was allowed to undergo the primary trimming in which the petiole scars of the wasabi rhizome and the bottom portion of the rhizome were cut, so that the cut faces were exposed. The base portions of the petioles coming out of the wasabi rhizome were left as they were.

The wasabi rhizome after the primary trimming was immersed in warm water (warm-water treatment). After the warm-water treatment, the water on the surface of the wasabi rhizome was wiped off, and the rhizome was then wrapped in paper, and further wrapped in a polypropylene bag. Then, the wasabi rhizome in the bag was received in a foamed polystyrene container and preserved under conditions with a temperature of 0°C, 5°C or 15°C for 2 weeks, 4 weeks, 6 weeks, or 9 weeks, and the state of the wasabi rhizome after the preservation was observed.

For comparison purposes, a wasabi rhizome after the primary trimming, but without warm-water treatment, was preserved under refrigeration in the same manner, and the state of the wasabi rhizome after the preservation was observed.

The table below shows the following: the water temperature and time for the warm-water treatment; and the observation results of the appearances of the wasabi rhizomes under the different Conditions, after the preservation at 0°C for 4 weeks. Three wasabi rhizomes were treated under each Condition.

**[Table 1]**

| Condition | Water temperature (°C) | Duration (minutes) | Appearance of wasabi rhizome preserved at 0°C for 4 weeks |
|---|---|---|---|
| 1 | without warm-water treatment | without warm-water treatment | dark-colored |
| 2 | 30 | 30 | dark-colored |
| 3 | 35 | 30 | dark-colored |
| 4 | 40 | 30 | dark-colored |
| 5 | 45 | 10 | not discolored and kept green |
| 6 | 45 | 20 | not discolored and kept green |
| 7 | 45 | 30 | not discolored and kept green |
| 8 | 45 | 60 | not discolored and kept green |
| 9 | 45 | 120 | not discolored and kept green |
| 10 | 50 | 10 | not discolored and kept green |
| 11 | 50 | 30 | not discolored and kept green |
| 12 | 55 | 10 | not discolored and kept green |
| 13 | 60 | 10 | yellowed |
| 14 | 65 | 10 | yellowed |
| 15 | 70 | 10 | yellowed |

The yellowed wasabi rhizomes, which were treated with warm water under Conditions 13, 14, and 15 and preserved at 0°C for 4 weeks, were eaten, and gave no scent and pungency peculiar to fresh wasabi rhizomes. This is presumably because the myrosinase, an enzyme associated with the development of the pungency, was deactivated by the warm-water treatment.

Figures 1 and 2 are the photographs of the appearances of the wasabi rhizomes before (Figure 1A (the upper row) and Figure 2A (the upper row)); and after preservation at 0°C for 4 weeks (Figure 1B (the lower row) and Figure 2B (the lower row)), wherein the wasabi rhizomes were not treated with warm water (Condition 1). The wasabi rhizomes after the preservation were browned, and the cut faces were dark-colored, and the base portions of the petioles were withered markedly. In addition, there were buds sprouting from the base portions of the petioles.

Figures 3 and 4 are the photographs of the whole appearances of the wasabi rhizomes before (Figure 3A (the upper row) and Figure 4A (the upper row)) and after preservation at 0°C for 4 weeks (Figure 3B (the lower row) and Figure 4B (the lower row)), wherein the wasabi rhizomes were treated with warm water under Condition 7 (45°C, for 30 minutes). The cut faces of the wasabi rhizomes after the preservation were not discolored and kept green. In addition, the base portions of the petioles after the preservation were not withered, and retained the same firmness as before the preservation. After the preservation, no sprouting buds were observed.

FIG 5 is the photographs of the appearances of the wasabi rhizomes which were treated with warm water under Condition 10 (50°C, for 10 minutes) and preserved at 0°C, 5°C, and 15°C for a given period of time. The wasabi rhizomes after being preserved at 0°C for 2 weeks, 4 weeks, and 6 weeks were not discolored and kept green. Although the photographs are not shown, the cut faces of the wasabi rhizomes treated with warm water under Condition 10 were not discolored even after being preserved at 0°C for 9 weeks. The wasabi rhizomes after being preserved at 5°C for 2 weeks and 4 weeks were also not discolored. After being preserved at 5°C for 6 weeks, the color darkened was observed. At 15°C, the color was darkened after the 2-week preservation.

After being preserved at 0°C for 4 weeks, the wasabi rhizomes treated with warm water under Conditions 5 to 12 gave the scent and pungency peculiar to fresh wasabi rhizomes. This indicated that the myrosinase activity associated with the development of the pungency remained.

### <Experiment 2: measurement of PAL activity of wasabi rhizome treated with warm water>

The present inventors have inferred as follows: in Experiment 1, the wasabi rhizomes treated with warm water were not dark-colored when preserved under refrigeration for 4 weeks or more, because the PAL (phenylalanine ammonia-lyase) activity which produces a polyphenol, a substrate of the causative agent of browning (becoming dark-colored), was deactivated by the warm-water treatment.

In accordance with the same procedure as in Experiment 1, the wasabi rhizomes were allowed to undergo the primary trimming immediately after the harvest, then treated with warm water under Condition 10 (50°C, for 10 minutes), and preserved under conditions with a temperature of 0°C for 2 weeks or 6 weeks. For comparison purposes, the wasabi rhizomes were allowed to undergo the primary trimming immediately after the harvest, not treated with warm water, and preserved under conditions with a temperature of 0°C for 2 weeks or 6 weeks. Ten wasabi rhizomes were prepared for each Condition.

The PAL activities were measured with the below-mentioned procedure for the wasabi rhizomes obtained: the wasabi rhizomes that were treated with warm water and preserved at 0°C for 2 weeks or 6 weeks; and the wasabi rhizomes that were not treated with warm water and were preserved at 0°C for 2 weeks or 6 weeks.

### (Retrimming)

The whole skin of a wasabi rhizome preserved at 0°C for 2 weeks or 6 weeks was chipped off using a peeler. This operation was regarded as "retrimming".

0.5 g of sample was obtained from the surface layer of the wasabi rhizome using a peeler, immediately after being retrimmed and after being preserved at 0°C for 3 days, 5 days, and 7 days after being retrimmed.

### (Enzyme extraction)

To a 0.2 M boric acid-NaOH buffer (pH 8.8), 2-mercaptoethanol was added at a final concentration of 5 mM (hereinafter referred to as 0.2 M BB incl. ME).

0.5 g of the sample, 2.3 mL of 0.2 M BB incl. ME, and 0.075 g of polyvinylpolypyrrolidone were mixed, and the resulting mixture was crushed using a multibead shocker (from Yasui Kikai Corporation) for a total of 30 seconds (under the crushing conditions at 3000 rpm).

The crush solution was transferred to a 1.5 mL tube, and centrifuged to obtain a supernatant. The supernatant obtained was centrifuged again, and a supernatant was collected. This supernatant collected was used as a crude enzyme liquid.

A total of 10 mL of 0.2 M BB incl. ME was allowed to flow through a desalting column PD MiniTrap G-25 (Cytiva), and equilibrated. To the equilibrated column, 500 µL of the crude enzyme solution was added, and then eluted with 1 mL of 0.2 M BB incl. ME. A solution obtained by this elution was used as a purified enzyme liquid.

### (Measurement of PAL (phenylalanine ammonia-lyase) activity)

750 µL of 0.5 M boric acid-NaOH buffer (pH 8.8), 100 µL of 10 mM L-phenylalanine solution, and 150 µL of the purified enzyme solution were mixed and allowed to start reaction. The reaction temperature was set at 41°C.

The absorbance at 290 nm of the reaction solution was measured at 5 minutes after and 65 minutes after the start of reaction, and the amount of an increase between the absorbance measured at 5 minutes after the start of reaction and that measured at 65 minutes thereafter was determined.

The absorbances of solutions having a cinnamic acid concentration of 0 µM, 1 µM, 2.5 µM, 10 µM, 25 µM, 50 µM, and 100 µM respectively, were measured at 290 nm to make a calibration curve. Based on the resulting calibration curve, the amount of the cinnamic acid generated in the purified enzyme solution in one hour was calculated from the amount of the increase in the absorbance.

The activity that allowed 1 µmol cinnamic acid to be generated per hour at 41°C was regarded as 1 Unit.

### (Quantitation of protein)

The amount of protein in the purified enzyme solution was measured in accordance with the attached manual of 2-D Quant kit (Cytiva).

The PAL activity (per mg of protein: U/g = µmol/h/mg) of the purified enzyme solution extracted from each sample was calculated.

### (Results)

In Figure 6, the white squares show the PAL activities (per mg of protein) in the wasabi rhizomes immediately after, 3 days, 5 days, and 7 days after retrimming of the wasabi rhizomes were treated with warm water, preserved at 0°C for 2 weeks. The white circles show the PAL activities (per mg of protein) in the wasabi rhizomes immediately after, 3 days, 5 days, and 7 days after retrimming of the wasabi rhizomes not treated with warm water were preserved at 0°C for 2 weeks.

In Figure 7, the white squares show the PAL activities (per mg of protein) in the wasabi rhizomes immediately after, 3 days, 5 days, and 7 days after retrimming of the wasabi rhizomes were treated with warm water, preserved at 0°C for 6 weeks. The white circles show the PAL activities (per mg of protein) in the wasabi rhizomes immediately after, 3 days, 5 days, and 7 days after retrimming of the wasabi rhizomes not treated with warm water were preserved at 0°C for 6 weeks.

The wasabi rhizomes treated with warm water under Condition 10 (50°C, for 10 minutes) and then preserved at 0°C for 2 weeks or 6 weeks caused no increase in the PAL activity at any time point after the retrimming.

However, the wasabi rhizomes that were not treated with warm water and were preserved at 0°C for 2 weeks or 6 weeks caused an increase in the PAL activity after 3 days, 5 days, and 7 days after the retrimming. A PAL activity (per mg of protein) of 5 days and 7 days after the retrimming was 0.03 U/mg or more in each of the samples.

This result supports the following: it is because the PAL (phenylalanine ammonia-lyase) activity of the wasabi rhizome is deactivated by the warm-water treatment that the discoloration of the wasabi rhizome treated warm water is suppressed during the preservation under refrigeration.

### <Experiment 3: freshness retention by alcohol treatment>

In the same manner as in Experiment 1, immediately after being harvested, a wasabi rhizome was allowed to undergo the primary trimming in which the petiole scars of the wasabi rhizome and the bottom portion of the rhizome were cut, so that the cut faces were exposed. The base portions of the petioles coming out of the wasabi rhizome were left as they were.

The wasabi rhizome after the primary trimming was immersed in an alcohol preparation (food additive) (containing 77% ethanol) for a duration of 3 minutes. After the immersion treatment, the wasabi rhizome was washed with water. The water on the surface of the wasabi rhizome was wiped off, and the rhizome was then wrapped in paper, and further wrapped in a polypropylene bag. Then, the wasabi rhizome in the bag was received in a foamed polystyrene container, and preserved under conditions with a temperature of 0°C for 4 weeks. The state of the wasabi rhizome was observed at each of the following time points: before the preservation, and 2 weeks and 4 weeks after the preservation.

For comparison purposes, a wasabi rhizome after the primary trimming was immersed in 50°C warm water for a duration of 10 minutes in the same manner as in Experiment 1, preserved under conditions with a temperature of 0°C for 4 weeks. The state of the wasabi rhizome was observed at each of the following time points: before the preservation, and 2 weeks and 4 weeks after the preservation.

In Figure 8, the upper row is the photographs of the appearances of the wasabi rhizomes, which were treated with alcohol, at each time point of preservation at 0°C. The lower row of Figure 8 is the photographs of the appearances of the wasabi rhizomes, which were treated with warm water, at each time point of preservation at 0°C. As with the wasabi rhizomes treated with warm water, the wasabi rhizomes treated with alcohol were not dark-colored after being preserved at 0°C for 4 weeks.

After being preserved at 0°C for 4 weeks, the wasabi rhizomes treated with alcohol gave the scent and pungency peculiar to fresh wasabi rhizomes. This indicated that the myrosinase activity associated with the development of the pungency remained.

### <Experiment 4: measurement of PAL activity of wasabi rhizome treated with alcohol>

In Experiment 3, three wasabi rhizomes treated with alcohol for a duration of 3 minutes were prepared.

Three wasabi rhizomes that had undergone the primary trimming immediately after the harvest were prepared as controls.

The whole skin of each wasabi rhizome was chipped off using a peeler. This operation was regarded as "retrimming". Unlike in Experiment 2, the wasabi rhizomes were not preserved under refrigeration before the retrimming.

0.5 g of sample was obtained from the surface layer of the wasabi rhizome using a peeler, immediately after being retrimmed as well as after being preserved at 0°C for 3 days (0.43 week), 7 days (1 week), 14 days (2 weeks), and 28 days (4 weeks) after being retrimmed.

According to the procedure as in Experiment 2, the PAL activity (per mg of protein: U/mg = µmol/h/mg) of the purified enzyme solution extracted from each sample was calculated.

In Figure 9, the white squares show the PAL activities (per mg of protein) in the wasabi rhizomes immediately after, 3 days, 1 week, 2 weeks, and 4 weeks after retrimming of the wasabi rhizomes were treated with alcohol. The white circles show the PAL activity (per mg of protein) in the wasabi rhizomes immediately after, 3 days, 1 week, 2 weeks, and 4 weeks after retrimming of the control wasabi rhizomes not treated with alcohol.

The wasabi rhizomes treated with alcohol caused no increase in the PAL activity at any time point after the retrimming.

However, the control wasabi rhizomes not treated with alcohol caused an increase in the PAL activity after 3 days, 1 week, and 2 weeks after the retrimming.

## Claims

1. A wasabi rhizome having a phenylalanine ammonia-lyase activity (per mg of protein) of less than 0.04 U/mg of protein (wherein 1 U refers to an activity that allows 1 µmol of cinnamic acid per hour to be generated from L-phenylalanine at 41°C), after preserving the wasabi rhizome at 0°C for 5 days following trimming of the surface thereof.

2. A method of preserving the wasabi rhizome according to claim 1, comprising preserving the wasabi rhizome according to claim 1 at a temperature of -5°C or more and 10°C or less.

3. A method of producing a wasabi rhizome with suppressed quality deterioration, the method comprising:
(1-1) immersing a wasabi rhizome in water having a temperature of more than 40°C and less than 60°C; and/or
(1-2) immersing the wasabi rhizome in an ethanol solution.

4. The method according to claim 3, wherein (1-1) is the step of immersing the wasabi rhizome in water having the temperature of more than 40°C and less than 60°C for a duration of 5 minutes or more and 180 minutes or less.

5. The method according to claim 3 or 4, wherein (1-2) is the step of immersing the wasabi rhizome in the ethanol solution with 45 v/v% or more and 90 v/v% or less ethanol for a duration of 1 minute or more and 10 minutes or less.

6. The method according to any one of claims 3 to 5, further comprising:
(2) preserving the wasabi rhizome under refrigeration after (1-1) and/or (1-2).

7. The method according to claim 6, wherein (2) is the step of preserving the wasabi rhizome at a temperature of -5°C or more and 10°C or less.

8. A method of producing a wasabi rhizome with suppressed quality deterioration, the method comprising:
(3) reducing a phenylalanine ammonia-lyase activity of the wasabi rhizome.

9. The method according to claim 8, wherein (3) is the step of reducing the phenylalanine ammonia-lyase activity (per mg of protein) of the wasabi rhizome such that the phenylalanine ammonia-lyase activity is less than 0.04 U/mg of protein (wherein 1 U refers to an activity that allows 1 µmol of cinnamic acid per hour to be generated from L-phenylalanine at 41°C), after preserving the wasabi rhizome at 0°C for 5 days following trimming of the surface thereof.

10. The method according to claim 8 or 9, further comprising:
(4) preserving the wasabi rhizome under refrigeration after (3).

11. The method according to claim 10, wherein (4) is the step of preserving the wasabi rhizome at a temperature of -5°C or more and 10°C or less.
